# EUROPEAN PATENT APPLICATION

(11) **EP 1 000 905 A2**
(43) Date of publication of application: **17.05.2000**
(21) Application number: 99122415.5
(22) Date of filing: 10.11.1999
(51) Int. Cl.: C02F 11/12

(54) **Process and installation for the drying and pelletizing of sludge, in particular sewage sludge**

(30) Priority: 10.11.1998 DE 19851612
(71) Applicant: Baker Hughes (Deutschland) GmbH, 29221 Celle (DE)
(72) Inventor: Jürgen Schmitz, 53797 Lohmar (Walschied) (DE); Werner Tolle, 31061 Alfeld (DE)
(74) Representative: Finck, Dieter, Dr.Ing.

(57) **Abstract**

In order to be able to produce, out of sewage sludge, in an economical way at reduced investment and operating costs, pellets, or agglomerates, that can be utilized without any further process, it is suggested according to the invention to dry mechanically dehydrated sludge (12) in a drying gas stream (13) and to convey the convection dried sludge (19) after separating it from the drying gas without intermediate storage and without further treatment directly to a pelletizer (24) in which sludge is formed into sludge pellets (28) that can be further utilized, e.g. composed (30).

## Description

The invention concerns a process for the drying and pelletizing of sludge, in particular sewage sludge, that is mechanically dehydrated, convection-dried in a gas steam and then shaped into pellets. In addition the invention concerns an installation for the execution of the process.

The sewage sludge produced in large quantities in sewage water treatment plants needs to be treated before it can be used in agriculture, as compost or before it can be incinerated or otherwise be disposed of. Thus, it is known from EP-B-0 396 852 to mechanically dehydrate wet sewage sludge in a centrifuge, chamber filter press or screen press machine and to subsequently dry it in a contact drier, e.g. a trough drier, down to a dry matter content (DM) of approximately 50%. The predried sludge is then conveyed into a granulator via a conveyor that forms the sludge into worm-shaped agglomerates that are subsequently further dried on a band drier exposed to a hot gas stream until the DM content is >90%. In a similar known process (DE-A-35 18 323) the device for the transformation of the predried sludge into the worm-shaped agglomerates is a matrix, through the perforations of which the pasty sludge is pressed. Aside from the mechanical complexity of this known process with its two-step drying, the risk cannot be excluded, when using contact dryers, that the pasty sewage sludge will stick to the hot contact surfaces.

Further known is the combined centrifugal dehydration and drying of sewage sludge in one compact unit in the form of a fully encased screw centrifuge used as the dispersing element for a directly downstream hot gas convection drier in such a manner that the drying gas flows through the solid matter discharge chamber of the centrifuge that in this fashion is used as a flow drier. The centrifuge-dehydrated solid matter that is thrown off the centrifugal drum is whirled in dispersed form by the drying gas in spiral-shaped tracks and dried and separated from the drying gas in a cyclone dust separator. To improve the handling qualities of the practically dust-form dried sewage sludge, it has already been suggested to store the granular product that is discharged from the cyclone separator for safety reasons in a silo, from where it is conveyed to a paddle mixer, and to render inert the silo system in order to reduce the risk of self-ignition of the convection-dried sewage sludge. By means of a screw conveyor the product that has been homogenized and aerated in the mixer is conveyed to a pelletizer in which the sludge is transformed into agglomerates that are easier to handle than the hot gas dried small-particle sludge product.

The invention is based on the problem of developing a safe and economic production process for the transformation of sewage sludge into sewage sludge pellets, respectively, sewage sludge agglomerates.

This task is solved according to the invention with regard to the process by the process steps of the characterizing part of Claim 1 and with regard to the installation by the characteristics of Claim 8. Advantageous configurations of the invention are indicated in the subordinate claims.

In the process according to the invention the sewage sludge, i.e. fresh sludge or fermented sludge from a communal sewage water treatment plant, is first mechanically dehydrated, usually in a fully encased screw centrifuge or in a chamber filter press. Subsequently the mechanically dehydrated sludge is not dried in a contact drier buy convection-dried in a flow drier in a hot gas stream, in particular, in a flow drier, the casing of which is identical to that of the centrifuge. With this combination of a fully encased screw centrifuge and flow drier, the risk of the sludge sticking to the hot surfaces is minimal. Surprisingly, it could be demonstrated that the convection-dried sewage sludge does not need to be stored in a silo, nor does it require to be aerated or to be made inert, in order to be formed into pellets or agglomerates. This is why according to the invention the dispersed dried sludge that has been separated from the hot gas stream with a DM content of 50-65% is conveyed without any intermediate storing or treatment to a pelletizer or compactor, where the sludge is formed into relatively stable sludge pellets or brick-shaped agglomerates that can then immediately and without further treatment be utilized.

According to one particular characteristic of the invention, the sludge pellets or agglomerates can be immediately disposed in layers and composted. The composting is particularly fast since a stack of layered sewage sludge pellets is easy to aerate so that the organic components of the sludge can quickly be decomposed by aerobic microorganisms, in which process the pellets also disintegrate more or less completely into compost. However, the sewage sludge pellets can also be distributed as fertilizer in distribution devices as they are used in agriculture for the distribution of fertilizer. Overall, the process according to the invention is economical through its simplicity.

For the purpose of composting, the sludge pellets produced by the pelletizer can have a worm shape of a length of between approximately 5-25 mm with a diameter of approximately 2-10 mm. As a pelletizer, a pellet press, a pellet drum or pellet plate can be used. Die-mold dual-roll press can also be used, by the die molds of which the convection-dried sludge is pressed into sludge bricks. The sludge bricks can have the shape of cushions, cigars, sausages, etc. with dimensions like the ones indicated above for the sludge pellets.

For the purpose of composting, it suffices to convection-dry the sludge prior to pelletizing or brick-dying it to a DM content of 50-65%. Sewage sludge agglomerates that have been dried in this fashion can have a temperature of approximately 40-80° C and need not be cooled before further processing. As the DM content increases the sewage sludge agglomerates become harder and more granulated, which makes them also usable as fertilizer in agriculture.

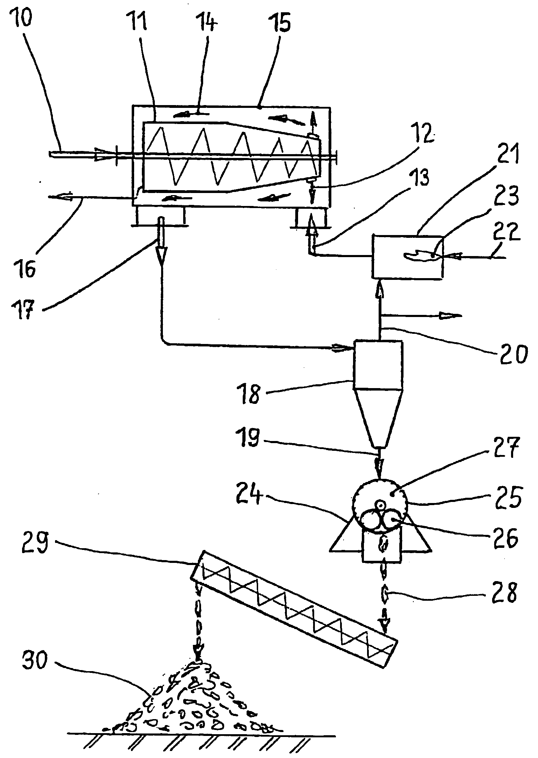

The invention and its additional characteristics and advantages are explained further based on the embodiment schematically shown in the drawing. *

The drawing shows the flow diagram of the continuous process, respectively, of the corresponding installation, according to the invention for the drying, pelletizing and utilization of sewage sludge 10 that is dehydrated to contain a dry matter content DM of approximately 35% in a screw centrifuge 11. The solid matter 12 that is thrown off at the solid matter discharge end (the right end) of the rotating centrifuge drum is impacted in its dispersed condition by a drying gas 13 and whirled round in spiraling tracks 14 within the ring-shaped space between the drum of the centrifuge and the casing of the centrifuge 15 and is dried, i.e. the casing of the centrifuge is simultaneously the casing of a flow drier. The centrifuge effluent separated by centrifugal force from the solid matter 12 is discharged at 16, as is schematically indicated. The drying gas 13 in which the solid matter particles 12 are suspended exits from the machine at 17 and pneumatically conveys the solid matter, which in the embodiment has been convection-dried to contain a DM content of approximately 50-60% dry matter, to a cyclone separator 18 by which the solid matter 19 is separated from the exhaust drying gas 20 that can be at least partially recycled to the hot gas generator 21 that generates the drying gas 13 by means of the burner 23 supplied with combustion air 22.

According to the invention the convection dried solid matter 19 is conveyed directly, without further storage or treatment, to a pelletizer, in the embodiment a pellet press 24 featuring a rotating perforated ring matrix 25 on the interior surface of which two or three compression rolls 26 can be pressed, through the effect of which sludge pellets are formed out of the solid matter material contained in the pelleting chamber 27 that, in the embodiment, are directly transported by way of a screw conveyor 29 to the composting position 30. The sludge pellets 28 can also be transported to the composting position 30 by truck, etc. As a result of the good aerability of the layer-deposited relatively form-stable sludge pellets 28, composting can be achieved quickly according to the invention and consequently a fast economic utilization of the sewage sludge can also be achieved. However, the continuously produced sludge pellets can also be burned, used as fertilizer in agriculture or can otherwise be used in an economic way.

## Claims

1. Process for the drying and pelletizing of sludge, in particular sewage sludge, that is mechanically dehydrated, convection-dried in a drying gas stream and formed into pellets, characterized in that the dried sludge (10), after separation from the drying gas (20), can be conveyed directly, without intermediate storage and without further treatment, to a pelletizer (24), or to a compactor, in which the sludge is formed into sludge pellets (28) or into agglomerates, for further utilization (30).

2. Process according to Claim 1, characterized in that sludge pellets (2) that exit from the pelletizer (24) are burned in a grate firing device or fluidized solids burner or the like.

3. Process according to Claim 1, characterized in that the sludge pellets (28) that exit from the pelletizer (24) are burned in a grate firing device or fluidized solids burner or the like.

4. Process according to one of Claims 1-3, characterized in that as a pelletizer, a pellet press (24) is used that forms the convection dried sludge (19) into worm-shaped pellets (28) of a length of approximately 5-25 mm and with a diameter of in particular 2-10 mm.

5. Process according to Claim 4, characterized in that a drum screen roll press (25, 26) is used as a pelletizer.

6. Process according to one of Claims 1-3, characterized in that, as an agglomeration device, a die-mold dual-roll press is used, the die molds of which form the convection dried sludge into sludge bricks.

7. Process according to Claims 1-6, characterized in that the sludge is dried to contain a dry matter DM content of approximately 50-65% before it is shaped into pellets/bricks.

8. Installation for the drying and pelletizing of sludge, in particular sewage sludge, characterized by a fully encased screw centrifuge (11), the casing of which features an inlet opening (13) and an outlet opening (17) for drying gas, the inlet opening (13) being connected to a hot gas generator (21) and the outlet (17) to a solid matter separator (18), the solid matter output (19) of which is conveyed directly to a pelletizer (24) for the production of sludge pellets (28).
